# EUROPEAN PATENT APPLICATION

(11) **EP 2 711 672 A1**
(43) Date of publication of application: **26.03.2014**
(21) Application number: 12185929.2
(22) Date of filing: 25.09.2012
(51) Int. Cl.: G01F 1/684

(54) **Flow detector**

(71) Applicant: Honeywell Technologies Sarl, 1180 Rolle (CH)
(72) Inventor: Cattaneo, Marco, 21047 Saronno, VA (IT); Spreafico, Michele, 23848 Ello, Lecco (IT)
(74) Representative: Sturm, Christoph

(57) **Abstract**

Flow detector (110), comprising a substrate (111) providing a sensing surface (112) that can be brought into direct or indirect contact with a fluid, a heater (113) provided on the sensing surface (112), temperature sensors (114, 115) provided on the sensing surface (112) on both sides of the heater (113), wherein the temperature sensors (114, 115) are formed as rectangular spirals having first sections (117) running parallel to a flow direction of the fluid and second sections (118) running perpendicular to the flow direction of the fluid.

## Description

The present patent application relates to a flow detector according the preamble of claim 1 or 7.

Flow detectors are well known from the prior art. Flow detectors comprise a substrate providing a sensing surface that can be brought into direct or indirect contact with a fluid, a heater provided on the sensing surface, and temperature sensors provided on the sensing surface on both sides of the heater. Such a flow detector is known from EP 1 124 114 A1. According to the prior art, the heater and the temperature sensors are all comb-tooth shaped.

Against this background, a novel flow detector is provided.

A first flow detector according to the present invention is defined in the claim 1.

The temperature sensors of the first flow detector according to the present invention are formed in a rectangular spiral shape having first sections running parallel to a flow direction of the fluid and second sections running perpendicular to the flow direction of the fluid.

A second flow detector according to the present invention is defined in the claim 7.

The temperature sensors of the second flow detector according to the present invention are formed in a two-dimensional space-filling curve shape having first sections running parallel to a flow direction of the fluid and second sections running perpendicular to the flow direction of the fluid.

Both flow detectors according to the present invention have improved measuring properties compared to flow detectors which make use of comb-tooth shaped temperature sensors. The flow detectors according to the present invention provide a more accurate flow measurement. The flow detectors according to the present invention provide more homogeneous distribution of the temperature sensors and the heater versus the flow in particular when the flow could be not laminar but more turbulent. So, the flow detectors according to the present invention have improved measuring properties especially for turbulent flow conditions of the fluid.

Preferred developments of the invention are provided by the dependent claims and the description which follows. Exemplary embodiments are explained in more detail on the basis of the drawing, in which:
- Figure 1: shows a schematic view of a flow detector according to a first embodiment of the present invention;
- Figure 2: shows a schematic view of a flow detector according to a second embodiment of the present invention;
- Figure 3: shows a schematic view of a flow detector according to a third embodiment of the present invention; and
- Figure 4: shows a schematic view of a flow detector according to a fourth embodiment of the present invention.

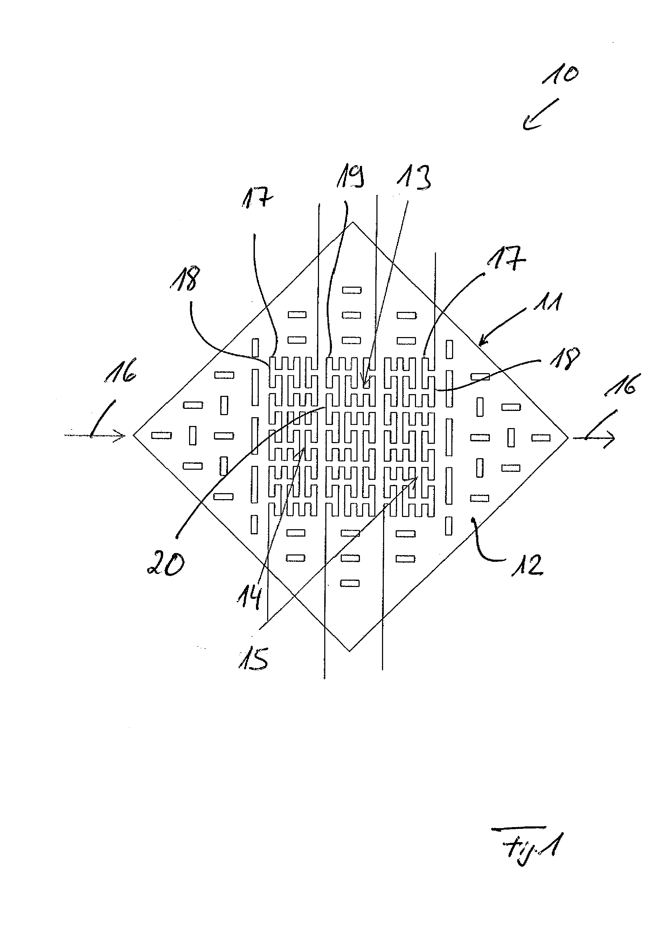

Figure 1 shows an embodiment of a mass flow detector 10 according to the present invention.

The flow detector 10 comprises a substrate 11 providing a sensing surface 12 that can be brought into direct or indirect contact with a fluid being subject of a flow measurement. A heater 13 is provided on the sensing surface 12 of the substrate 11.

Further on, temperature sensors 14, 15 are provided on the sensing surface 12 of the substrate 11, whereby the temperature sensor 14 is positioned on a first side of the heater 13 and whereby the temperature sensor 15 is positioned on a second side of the heater 13.

Figure 1 further illustrates the flow direction 16 of the fluid being subject of a flow measurement. The temperature sensor 14 is positioned seen in this flow direction upstream of the heater 13 and the temperature sensor 15 is positioned seen in this flow direction downstream of the heater 13.

According to Figure 1, the temperature sensors 14, 15 are formed in a two-dimensional space-filling curve shape having first sections 17 running parallel to a flow direction of the fluid and second sections 18 running perpendicular to the flow direction of the fluid.

In the embodiment of Figure 1, also the heater 13 is formed in a two-dimensional space-filling curve shape having first sections 19 running parallel to a flow direction of the fluid and second sections 20 running perpendicular to the flow direction of the fluid.

The space-filling curve shape of the temperature sensors 14, 15 are Peano curves. These Peano curves of the temperature sensors 14, 15 have at least a second order of iteration.

Further on, the space-filling curve of the heater 13 is a Peano curve. The Peano curve of the heater 13 has the same iteration order like the Peano curves of temperature sensors 14, 15.

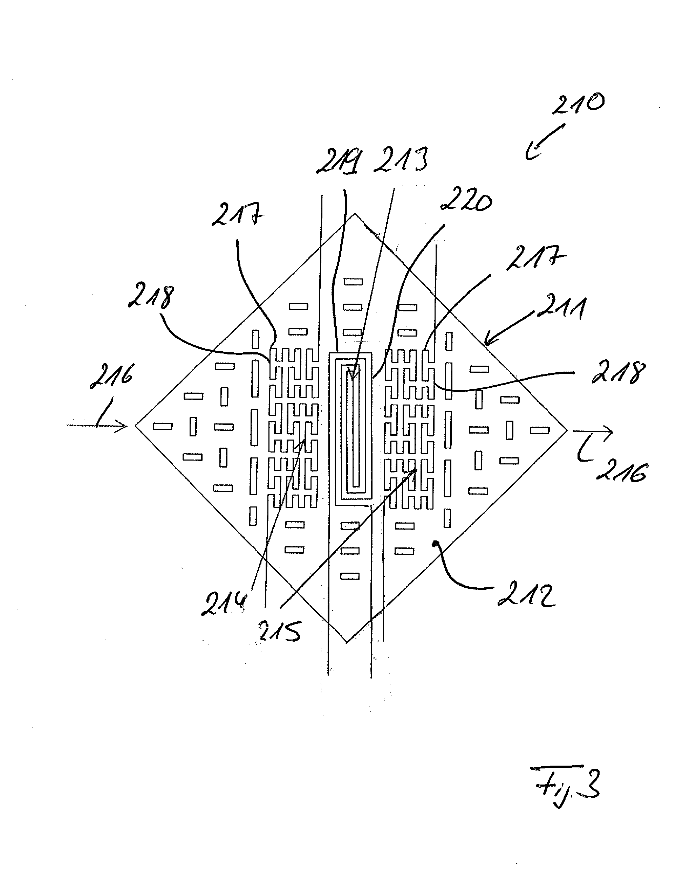

In the embodiment of Figure 3, only the temperature sensors 214, 215 provided on the sensing surface 212 of the substrate 211 of the flow detector 210 are formed in a two-dimensional space-filling curve shape having first sections 217 running parallel to a flow direction of the fluid and second sections 218 running perpendicular to the flow direction of the fluid. In the embodiment of Figure 3, the heater 213 is formed in a rectangular spiral shape having first sections 219 running parallel to a flow direction 216 of the fluid and second sections 220 running perpendicular to the flow direction 216 of the fluid.

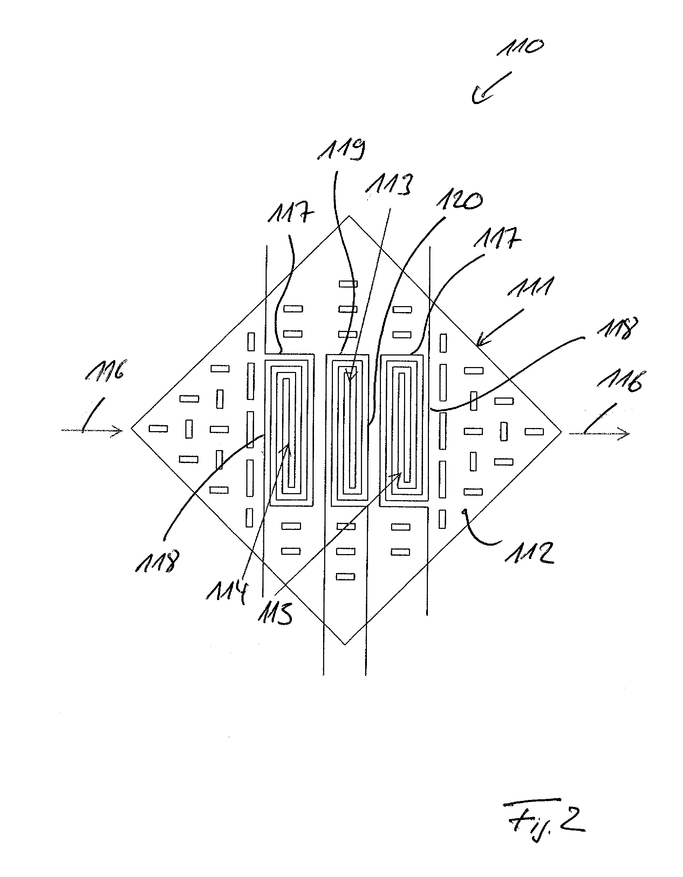

Figure 2 shows another embodiment of a mass flow detector 110 according to the present invention.

The flow detector 110 comprises a substrate 111 providing a sensing surface 112 that can be brought into direct or indirect contact with a fluid being subject of a flow measurement. A heater 113 is provided on the sensing surface 112 of the substrate 111.

Further on, temperature sensors 114, 115 are provided on the sensing surface 112 of the substrate 111, whereby the temperature sensor 114 is positioned on a first side of the heater 113 and whereby the temperature sensor 115 is positioned on a second side of the heater 113.

Figure 2 further illustrates the flow direction 116 of the fluid being subject of a flow measurement. The temperature sensor 114 is positioned seen in this flow direction upstream of the heater 113 and the temperature sensor 115 is positioned seen in this flow direction downstream of the heater 113.

According to Figure 2, the temperature sensors 114, 115 are formed in a rectangular spiral shape having first sections 117 running parallel to a flow direction 116 of the fluid and second sections 118 running perpendicular to the flow direction 116 of the fluid.

In the embodiment of Figure 2, also the heater 113 is formed in a rectangular spiral shape having first sections 119 running parallel to a flow direction 116 of the fluid and second sections 120 running perpendicular to the flow direction 116 of the fluid.

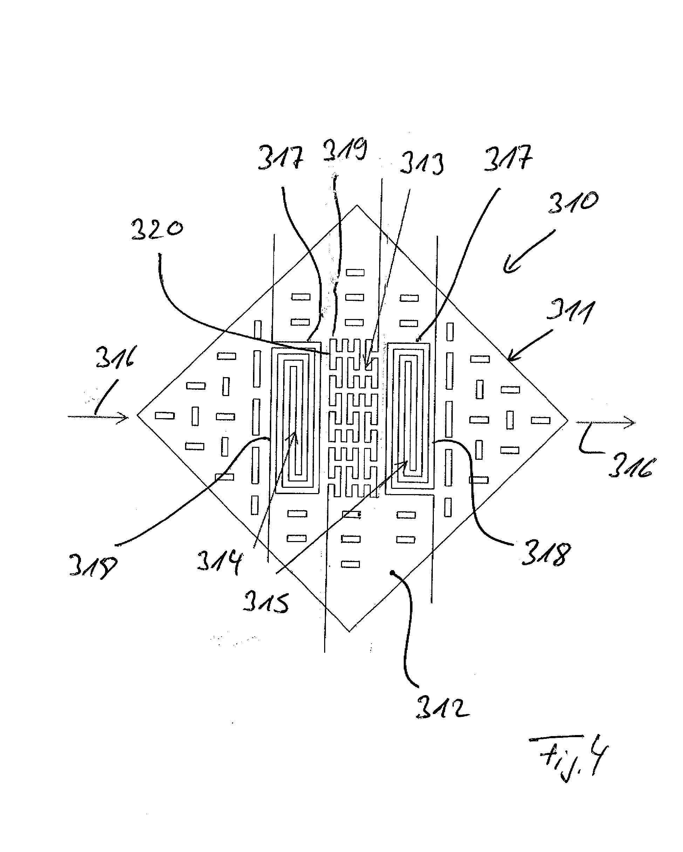

In the embodiment of Figure 4, only the temperature sensors 314, 315 provided on the sensing surface 312 of the substrate 311 of the flow detector 310 are formed in a rectangular spiral shape having first sections 317 running parallel to a flow direction of the fluid and second sections 318 running perpendicular to the flow direction of the fluid. In the embodiment of Figure 3, the heater 313 is formed in a two-dimensional space-filling curve shape having first sections 319 running parallel to a flow direction 316 of the fluid and second sections 320 running perpendicular to the flow direction 316 of the fluid. The space-filling curve shape of the heater 313 is a Peano curve. The Peano curve of the heater 313 at least a second order of iteration.

In the embodiments of Figures 2 and 4, each temperature sensor 114, 115, 314, 315 is formed as one single rectangular spiral. In the embodiments of Figures 2 and 3, the respective heater 113, 213 is formed as one single rectangular spiral.

In the shown embodiments of Figures 1 to 4 the heaters can also be formed in a comb-tooth shape.

Each temperature sensor 14, 15, 114, 115, 214, 215, 314, 315 and each heater 13, 113, 213, 313 of the shown embodiments comprises a width in the flow direction of the fluid of one unit and a height perpendicular to the flow direction of the fluid of three units high. So, the width:height ratio is 1:3. Preferably the width/height ratio is in a range of 1:2 to 1:4, most preferably the width/height ratio is in a range of 1:2.5 to 1:3.5.

### List of reference signs

- 10: flow detector
- 11: substrate
- 12: sensing surface
- 13: heater
- 14: temperature sensor
- 15: temperature sensor
- 16: flow direction
- 17: first section
- 18: second section
- 19: first section
- 20: second section

- 110: flow detector
- 111: substrate
- 112: sensing surface
- 113: heater
- 114: temperature sensor
- 115: temperature sensor
- 116: flow direction
- 117: first section
- 118: second section
- 119: first section
- 120: second section
- 210: flow detector
- 211: substrate
- 212: sensing surface
- 213: heater
- 214: temperature sensor
- 215: temperature sensor
- 216: flow direction
- 217: first section
- 218: second section
- 219: first section
- 220: second section

- 310: flow detector
- 311: substrate
- 312: sensing surface
- 313: heater
- 314: temperature sensor
- 315: temperature sensor
- 316: flow direction
- 317: first section
- 318: second section
- 319: first section
- 320: second section

## Claims

1. Flow detector, comprising
a substrate (111, 311) providing a sensing surface (112, 312) that can be brought into direct or indirect contact with a fluid,
a heater (113, 312) provided on the sensing surface (112, 312), temperature sensors (114, 115, 314, 315) provided on the sensing surface (112, 312) on both sides of the heater (113, 313), **characterized in that**
the temperature sensors (114, 115, 314, 315) are formed as rectangular spirals having first sections (117, 317) running parallel to a flow direction of the fluid and second sections (118, 318) running perpendicular to the flow direction of the fluid.

2. Flow detector as claimed in claim 1, **characterized in that** each temperature sensor (114, 115) is formed as one single rectangular spiral.

3. Flow detector as claimed in claim 1 or 2, **characterized in that** the heater (113) is formed as a rectangular spiral having first sections (119) running parallel to a flow direction of the fluid and second sections (120) running perpendicular to the flow direction of the fluid.

4. Flow detector as claimed in claim 1 or 2, **characterized in that** the heater (313) is formed in a two-dimensional space-filling curve shape having first sections (319) running parallel to a flow direction of the fluid and second sections (320) running perpendicular to the flow direction of the fluid.

5. Flow detector as claimed in claim 4, **characterized in that** the space-filling curve shape of the heater (313) is a Peano curve having at least a second order of iteration.

6. Flow detector as claimed claim 1 or 2, **characterized in that** the heater is formed in a comb-tooth shape.

7. Flow detector, comprising
a substrate (11, 211) providing a sensing surface (12, 212) that can be brought into direct or indirect contact with a fluid,
a heater (13, 213) provided on the sensing surface (12, 212), temperature sensors (14, 15, 214, 215) provided on the sensing surface (12, 212) on both sides of the heater (13, 213),
**characterized in that**
the temperature sensors (14, 15, 214, 215) are formed in a two-dimensional space-filling curve shape having first sections (17, 217) running parallel to a flow direction of the fluid and second sections (18, 218) running perpendicular to the flow direction of the fluid.

8. Flow detector as claimed in claim 7, **characterized in that** the space-filling curve shape of the temperature sensors (14, 15, 214, 215) are Peano curves having at least a second order of iteration.

9. Flow detector as claimed claim 7 or 8, **characterized in that** the heater (13) is formed in a two-dimensional space-filling curve shape having first sections (19) running parallel to a flow direction of the fluid and second sections (20) running perpendicular to the flow direction of the fluid.

10. Flow detector as claimed in claim 9, **characterized in that** the space-filling curve of the heater (13) is a Peano curve having the same iteration order like the Peano curves of temperature sensors (14, 15).

11. Flow detector as claimed claim 7 or 8, **characterized in that** the heater (213) is formed as a rectangular spiral having first sections (219) running parallel to a flow direction of the fluid and second sections (220) running perpendicular to the flow direction of the fluid.

12. Flow detector as claimed claim 7 or 8, **characterized in that** the heater is formed in a comb-tooth shape.

13. Flow detector as claimed in one of claims 1 to 12, **characterized in that** each temperature sensor (14, 15, 114, 115, 214, 215, 314, 315) and each heater (13, 113, 213, 313) comprises a width in the flow direction of the fluid and a height perpendicular to the flow direction of the fluid, wherein the width :height ratio in a range of 1:2 to 1:4.
